# EUROPÄISCHE PATENTANMELDUNG

(11) **EP 1 394 882 A2**
(43) Veröffentlichungstag der Anmeldung: **03.03.2004**
(21) Anmeldenummer: 03019845.1
(22) Anmeldetag: 01.09.2003
(51) Int. Cl.: H01M 8/04

(54) **Brennstoffzellenanlage zur Hausenergieversorgung**

(30) Priorität: 02.09.2002 DE 10240952
(71) Anmelder: Viessmann Werke GmbH & Co, 35107 Allendorf (DE)
(72) Erfinder: Britz, Peter, Dr., 35108 Allendorf (DE); Zartener, Nicolas, 35091 Cölbe (DE); Heikrodt, Klaus, Dr., 35108 Allendorf (DE)
(74) Vertreter: Wolf, Günter, Dipl.-Ing.

(57) **Zusammenfassung**

Die Erfindung betrifft eine Brennstoffzellenanlage zur Hausenergieversorgung, umfassend einen mit einem Gasbrenner 12 beheizten Gaserzeugungsapparat 1 zur Umwandlung von Kohlenwasserstoffgas und Wasser in Wasserstoff und weitere Reformerprodukte und eine Brennstoffzelle 2, vorzugsweise eine Polymermembran-Brennstoffzelle, zur Umwandlung des Wasserstoffs in elektrische Energie und Wärme, wobei wahlweise an Zufuhr- 3, Abfuhr- 4 und/oder Verbindungsleitungen 5 der Anlage Wärmetauscher 6 angeordnet sind. Nach der Erfindung ist vorgesehen, dass mindestens einer der Wärmetauscher 6 zur Produktwasserrückgewinnung einen Kondensatwasserabfuhranschluss 7 aufweist und als Verdampfer einer Wärmepumpe 8 ausgebildet ist, die einen Kondensator 9 aufweist, der thermisch mit einem Rücklauf 10 eines Heizkreislaufes 11 eines Gebäudes verbunden ist.

## Beschreibung

Die Erfindung betrifft eine Brennstoffzellenanlage zur Hausenergieversorgung gemäß dem Oberbegriff des Anspruchs 1.

Eine Brennstoffzellenanlage der eingangs genannten Art ist beispielsweise nach der DE 100 57 537 A1 bekannt. Die an Zufuhr-, Abfuhr- und/oder Verbindungsleitungen vorgesehenen Wärmetauscher haben dabei die Aufgabe, beim Übergang der Prozessgase von einem auf das andere Bauelement das jeweils erforderliche Temperaturniveau zu gewährleisten. Beispielsweise ist zwischen dem Reformer und der ersten Shiftstufe des Gaserzeugungsapparats ein Wärmetauscher angeordnet, der das Prozessgas (Wasserstoff, Kohlendioxid und Kohlenmonoxid) von etwa 800°C auf 300°C herunterkühlt. Umkehrt dient ein an der Wasserzufuhrleitung vorgesehener Wärmetauscher dazu, das für den Reformerprozess erforderliche Wasser aufzuheizen.

Überhaupt kommt dem Arbeitsmittel Wasser beim Brennstoffzellenprozess eine große Bedeutung zu, denn es wird nicht nur als Edukt zusammen mit dem Kohlenwasserstoffgas für den Reformerprozess benötigt, sondern es fällt auch als Produkt beim Brennstoffzellenprozess an, nämlich an der Kathode beispielsweise einer Polymermembran-Brennstoffzelle, die hier im folgenden stets betrachtet werden soll.

Das Wasser, das dem Gaserzeugungsapparat zugeführt wird, muss dabei vorher gründlich gereinigt werden, da sowohl die Katalysatoren der Anlage als auch die Polymermembran der Brennstoffzelle durch Verunreinigungen schlimmstenfalls sogar zerstört werden. Üblicherweise ist solchen Brennstoffzellenanlagen mit PEM-Brennstoffzellen daher eine sogenannte Entschwefelungspatrone zur Reinigung des Kohlenwasserstoffgases und eine Demineralisierungseinrichtung zur Entsalzung des Wassers vorgeschaltet, um einen beschädigungsfreien Betrieb der Brennstoffzelle auf Dauer zu gewährleisten.

Derartige Entschwefelungspatronen und Demineralisierungen sind allerdings vergleichsweise kostenintensiv. Darüber hinaus besteht das Problem, dass im Prozess befindliches Wasser zur weiteren Verwendung nur mittels des etwa 40°C warme Heizungsrücklaufs auskondensierbar ist, da andere, kühlere Quellen zum Auskondensieren in der Regel nicht zur Verfügung stehen.

Der Erfindung liegt die Aufgabe zugrunde, bei einer Brennstoffzellenanlage der eingangs genannten Art auf technisch möglichst einfache Weise dafür zu sorgen, dass möglichst große Mengen an im Prozess ohnehin vorhandenen Wasserdampf auskondensiert werden und somit dafür gesorgt ist, dass pro Betriebszeiteinheit weniger Leitungswasser von aussen zugeführt wird und damit ein geringerer Reinigungsaufwand für dieses besteht.

Diese Aufgabe ist mit einer Brennstoffzellenanlage der eingangs genannten Art durch die im Kennzeichen des Anspruchs 1 genannten Merkmale gelöst.

Nach der Erfindung ist also vorgesehen, mindestens einen, wahlweise aber auch mehrere der vorhandenen Wärmetauscher mit einer Wärmepumpe zu verkoppeln, die es nach dem bekannten Wärmepumpenprinzip ermöglicht, über den mindestens einen als Verdampfer ausgebildeten, zur Brennstoffzellenanlage gehörenden Wärmetauscher dem Prozessgas Wärme zu entziehen und diese Wärme dem etwa 40°C warmen Rücklauf des Heizkreislaufes zuzuführen. Mittels der Wärmepumpe wird dabei die ansonsten insbesondere bezüglich der auf einem ähnlichen Temperaturniveau befindlichen Brennstoffzellenabluft vergleichsweise schlechte Wärmeübertragung deutlich verbessert, da die Wärmepumpe ja gewissermaßen zu einer Spreizung des Temperaturgefälles zwischen dem Prozessgas und dem Heizkreisrücklauf führt.

Durch den erfindunggemäßen Einsatz der Wärmepumpe, die vorzugsweise als Micro-Elektrowärmepumpe mit einem äußerst geringen Stromverbrauch ausgebildet ist und somit aufgrund der gleichzeitigen Verringerung des Aufwandes zur Demineralisierung des Prozesswassers durchaus rentabel arbeitet, ergibt sich somit die Möglichkeit, an mehreren Stellen der Brennstoffzellenanlage Wasser auszukondensieren und über den Kondensatwasserabfuhranschluss am Wärmetauscher zur weiteren Verwendung zur Verfügung zu stellen. Damit muss insgesamt wesentlich weniger frisches, noch zu demineralisierendes Wasser nachgefüllt werden, was den Vorteil hat, dass die aus der Demineralisierung bestehende Wasseraufbereitungsanlage mit deutlich längeren Wartungs- bzw. Erneuerungsintervallen auskommt.

vorteilhafte Weiterbildungen der Brennstoffzellenanlage ergeben sich aus den abhängigen Ansprüchen.

Die erfindunggemäße Brennstoffzellenanlage sowie ihre vorteilhaften Weiterbildungen werden nachfolgend anhand der zeichnerischen Darstellung zweier Ausführungsbeispiele näher erläutert.

Es zeigt schematisch
- Fig. 1: ein einfaches Ausführungsbeispiel der erfindungsgemäßen Brennstoffzellenanlage mit Wärmepumpe; und
- Fig. 2: eine Brennstoffzellenanlage, die über vier Wärmetauscher mit einer heizkreisgekühlten Wärmepumpe verbunden ist.

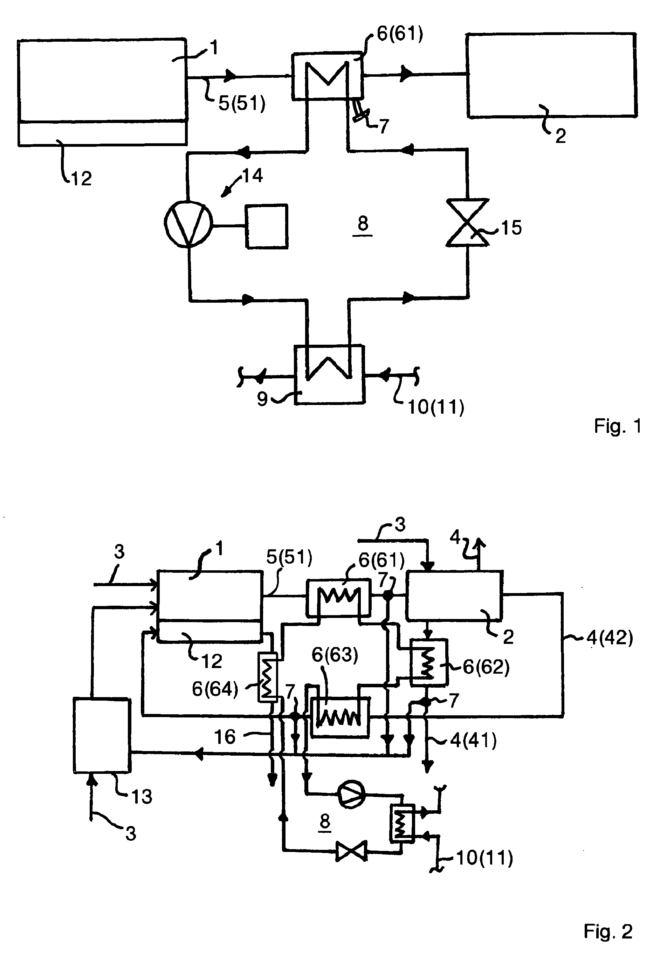

In Fig. 1 ist ein einfaches Ausführungsbeispiel einer Brennstoffzellenanlage zur Hausenergieversorgung dargestellt. Diese umfasst einen mit einem Gasbrenner 12 beheizten Gaserzeugungsapparat 1 zur Umwandlung von Kohlenwasserstoffgas und Wasser in Wasserstoff und weitere Reformerprodukte wie Kohlendioxid und Kohlenmonoxid. Der Gasbrenner 12 kann, wie in Fig. 2 dargestellt, wahlweise mit dem sogenannten Anodenrestgas der Brennstoffzelle, aber auch herkömmlich direkt mit Erdgas betrieben werden. Der Gaserzeugungsapparat 1 besteht regelmäßig aus einem Reformerkatalysator mit mindestens einer nachgeschalteten Katalysatorstufe zur Reduzierung des für den Katalysator der Brennstoffzelle schädlichen Kohlenmonoxidanteils im Produktgas. Ferner umfasst die Anlage auch mindestens noch eine Brennstoffzelle 2, vorzugsweise eine Polymermembran-Brennstoffzelle, zur Umwandlung des Wasserstoffs in elektrische Energie und Wärme, wobei beim dargestellten Ausführungsbeispiel insbesondere an der Verbindungsleitung 5, 51 zwischen dem Gaserzeugungsapparat 1 und der Brennstoffzelle 2 ein Wärmetauscher 6, 61 angeordnet ist.

Wesentlich für die erfindungsgemäße Brennstoffzellenanlage ist nun, und das gilt auch für die noch zu erläuternde Fig. 2, dass mindestens einer der an verschiedenen Stellen der Anlage vorgesehenen Wärmetauscher 6, 61 (in Fig. 1 ist derjenige zwischen Gaserzeugungsapparat 1 und Brennstoffzelle 2 gemeint) zur Produktwasserrückgewinnung einen Kondensatwasserabfuhranschluss 7 aufweist und als Verdampfer einer Wärmepumpe 8 ausgebildet ist. Die Wärmepumpe 8 besteht ferner aus einer Pumpe 14 mit Motor, einer Drossel 15 und einem Kondensator 9, der thermisch mit einem Rücklauf 10 eines Heizkreislaufes 11 verbunden ist.

Strömt also das mindestens warme Produktgas vom Gaserzeugungsapparat 1 zur Brennstoffzelle 2, wird diesem mittels des Wärmetauschers 61 Wärme entzogen. Beim Wärmeentzug kommt es gleichzeitig zum Auskondensieren des im Produktgas dampfförmig enthaltenen Wassers, das über den Kondensatwasserabfuhranschluss 7 zur weiteren Verwertung abgeführt wird. Im Kreis der Wärmepumpe zirkuliert, wie üblich, ein Kältemittel, das die Wärme des Produktgasstromes am Wärmetauscher 61 aufnimmt. Im nächsten Schritt erfolgt die Kompression des Kältemittels, so dass dieses anschliessend die Wärme an den auf einem tieferen Temperaturniveau zirkulierenden Heizkreis 11 eines Gebäudes abgeben kann. Schließlich wird das Kältemittel noch über die Drossel 15 entspannt, um erneut Wärme des Produktgases am Wärmetauscher 61 aufnehmen zu können.

Bezüglich des bereits mehrfach erwähnten Heizkreises sei ergänzt, dass es sich dabei wahlweise um einen konventionellen Heizkreis einer Heizungsanlage mit Gas- oder Ölbrenner, gegebenenfalls auch mit Solaranlage, aber auch um einen Heizkreis eines mit Strom und Wärme einer Brennstoffzelle versorgten Gebäudes handeln kann, der sich technisch allerdings kaum oder garnicht vom erstgenannten unterscheidet.

In Fig. 2 ist ein Ausführungsbeispiel der erfindunggemäßen Brennstoffzellenanlage mit mehreren Wärmetauschern 6, 61, 62, 63, 64 dargestellt. Diese Anlage hat Zufuhranschlüsse 3 für Kohlenwasserstoffgas (am Gaserzeugungsapparat 1), für Wasser (am Sammelbehälter 13, der gleichzeitig auch die Demineralisierungseinrichtung zur Wasseraufbereitung enthält) und für Luft (an der Brennstoffzelle 2). Ferner ist (wie auch in Fig. 1) eine Verbindungsleitung 5, 51 zwischen dem Gaserzeugungsapparat und der Brennstoffzelle 2 vorgesehen. Schließlich sind an der Brennstoffzelle 2 Abfuhrleitungen 4, 41, 42 für Abluft, Wasser und Anodenrestgas und am Brenner 12 für Abgas angeordnet. Die Kondensatwasserabfuhranschlüsse 7 sind so ausgebildet, dass am Wärmetauscher 6, 61, 62, 63, 64 anfallendes, auskondensiertes Wasser über Leitungen dem Sammelbehälter 13 zuführbar ist.

Beim Ausführungsbeispiel gemäß Fig. 2 ist folgende Anordnung der Wärmetauscher 6 vorteilhaft vorgesehen:
a) ein zum Wärmepumpenkreis gehörender und bezogen auf die Wärmepumpe 8 als Verdampfer wirkender Wärmetauscher 61 ist an einer Verbindungsleitung 51 zwischen dem Gaserzeugungsapparat 1 und der Brennstoffzelle 2 angeordnet;
b) ein zum Wärmepumpenkreis gehörender und bezogen auf die Wärmepumpe 8 als Verdampfer wirkender Wärmetauscher 62 ist an einer Kathoden-Abfuhrleitung 41 der Brennstoffzelle 2 angeordnet;
c) ein zum Wärmepumpenkreis gehörender und bezogen auf die Wärmepumpe 8 als Verdampfer wirkender Wärmetauscher 63 ist an einer Anodenrestgas-Abfuhrleitung 42 der Brennstoffzelle 2 angeordnet; und
d) ein zum Wärmepumpenkreis gehörender und bezogen auf die Wärmepumpe 8 als Verdampfer wirkender Wärmetauscher 64 ist an einer Abgasleitung 16 des Gasbrenners 12 angeordnet.
wobei die Wärmetauscher 61, 62, 63, 64 bezüglich des Wärmepumpenkreises hintereinander in Reihe geschaltet sind und auf diese Weise gemeinsam als Verdampfer der Wärmepumpe 8 wirken.

Darüberhinaus ist, wie erwähnt, ein Sammelbehälter 13 für Prozesswasser vorgesehen ist, der hydraulisch mit den Kondensatwasserabfuhranschlüssen 7 verbunden ist.

### Bezugszeichenliste

- 1: Gaserzeugungsapparat
- 2: Brennstoffzelle
- 3: Zufuhrleitung
- 4, 41, 42: Abfuhrleitung
- 5, 51: Verbindungsleitung
- 6, 61, 62, 63, 64: Wärmetauscher
- 7: Kondensatwasserabfuhranschluss
- 8: Wärmepumpe
- 9: Kondensator
- 10: Rücklauf
- 11: Heizkreislauf
- 12: Gasbrenner
- 13: Sammelbehälter
- 14: Pumpe
- 15: Drossel
- 16: Abgasleitung

## Patentansprüche

1. Brennstoffzellenanlage zur Hausenergieversorgung, umfassend einen mit einem Gasbrenner (12) beheizten Gaserzeugungsapparat (1) zur Umwandlung von Kohlenwasserstoffgas und Wasser in Wasserstoff und weitere Reformerprodukte und eine Brennstoffzelle (2), vorzugsweise eine Polymermembran-Brennstoffzelle, zur Umwandlung des Wasserstoffs in elektrische Energie und Wärme, wobei wahlweise an Zufuhr- (3), Abfuhr- (4) und/oder Verbindungsleitungen (5) der Anlage Wärmetauscher (6) angeordnet sind,
**dadurch gekennzeichnet,**
**dass** mindestens einer der Wärmetauscher (6) zur Produktwasserrückgewinnung einen Kondensatwasserabfuhranschluss (7) aufweist und als Verdampfer einer Wärmepumpe (8) ausgebildet ist, die einen Kondensator (9) aufweist, der thermisch mit einem Rücklauf (10) eines Heizkreislaufes (11) verbunden ist.

2. Brennstoffzellenanlage nach Anspruch 1,
**dadurch gekennzeichnet,**
**dass** ein zum Wärmepumpenkreis gehörender und bezogen auf die Wärmepumpe (8) als Verdampfer wirkender Wärmetauscher (61) an einer Verbindungsleitung (51) zwischen dem Gaserzeugungsapparat (1) und der Brennstoffzelle (2) angeordnet ist.

3. Brennstoffzellenanlage nach Anspruch 1 oder 2,
**dadurch gekennzeichnet,**
**dass** ein zum Wärmepumpenkreis gehörender und bezogen auf die Wärmepumpe (8) als Verdampfer wirkender Wärmetauscher (62) an einer Kathoden-Abfuhrleitung (41) der Brennstoffzelle (2) angeordnet ist.

4. Brennstoffzellenanlage nach einem der Ansprüche 1 bis 3,
**dadurch gekennzeichnet,**
**dass** ein zum Wärmepumpenkreis gehörender und bezogen auf die Wärmepumpe (8) als Verdampfer wirkender Wärmetauscher (63) an einer Anodenrestgas-Abfuhrleitung (42) der Brennstoffzelle (2) angeordnet ist.

5. Brennstoffzellenanlage nach einem der Ansprüche 1 bis 4,
**dadurch gekennzeichnet,**
**dass** ein zum Wärmepumpenkreis gehörender und bezogen auf die Wärmepumpe (8) als Verdampfer wirkender Wärmetauscher (64) an einer Abgasleitung (16) des Gasbrenners (12) angeordnet ist.

6. Brennstoffzellenanlage nach einem der Ansprüche 1 bis 5,
**dadurch gekennzeichnet,**
**dass** ein Sammelbehälter (13) für Prozesswasser vorgesehen ist, der hydraulisch mit dem mindestens einen Kondensatwasserabfuhranschluss (7) verbunden ist.

7. Brennstoffzellenanlage nach den Ansprüchen 2 bis 5,
**dadurch gekennzeichnet,**
**dass** die Wärmetauscher (61, 62, 63, 64) bezüglich des Wärmepumpenkreises hintereinander in Reihe geschaltet sind und auf diese Weise gemeinsam als Verdampfer der Wärmepumpe (8) wirken.
